Europäisches Patentamt

European Patent Office

Office européen des brevets

(11) Publication number : **0 381 878 B1**

# (12) EUROPEAN PATENT SPECIFICATION

(45) Date of publication of patent specification :
30.11.94 Bulletin 94/48

(51) Int. Cl.⁵ : **H04L 12/26**

(21) Application number : **89301198.1**

(22) Date of filing : **08.02.89**

(54) Network diagnosis apparatus and method.

(43) Date of publication of application :
16.08.90 Bulletin 90/33

(45) Publication of the grant of the patent :
30.11.94 Bulletin 94/48

(84) Designated Contracting States :
DE FR GB IT

(56) References cited :
US-A- 4 766 549
PATENT ABSTRACTS OF JAPAN, vol. 9, no.
110 (E-314)[1833], 15th May 1985; & JP-A-60
1950 (MATSUSHITA DENKI SANGYO K.K.)
08-01-1985
MILCOM '87, IEEE MILITARY COMMUNI-
CATIONS CONFERENCE, Washington, D.C.,
19th-22nd October 1987, vol. 2, pages 370-376,
IEEE, New York, US; P. SEVCIK et al.:
"Neptune performance measurement con-
cept and tool"

(73) Proprietor : **Hewlett-Packard Company**
**Mail Stop 20 B-O,**
**3000 Hanover Street**
**Palo Alto, California 94304 (US)**

(72) Inventor : **Burns, Roland John**
**Highview**
**The Square**
**Winscombe Avon BS25 1BS (GB)**
Inventor : **Riley, Martyn James**
**21 Silverbirch Close**
**Little Stoke**
**Bristol BS12 6RL (GB)**

(74) Representative : **Coker, David Graeme**
**Hewlett-Packard Limited**
**Intellectual Property Section**
**Building 2**
**Filton Road**
**Stoke Gifford Bristol BS12 6QZ (GB)**

## Description

The present invention relates to network diagnostic apparatus and methods and relates particularly, but not exclusively, to a diagnostic tool for mapping the position of network nodes on a local area network (LAN).

It is generally known that the transmission time between a transmission station and respective reception stations of a network may be measured. For example, the invention described in Japanese patent application No. 58-108761, published as JP-A-60-1950, requires a transmitting station to perform a transmission to station Y, which then acknowledges, and then a separate transmission to station Y′, which then also acknowledges. The transmitting station itself determines the time difference between the respective acknowledgements in order to determine the difference in transmission times to the respective stations. However, the technique described in JP-A-60-1950 is not suitable for implementing a network diagnostic tool suitable for mapping the position of network nodes on a local area network since it would require every network station to be capable of calculating or implementing an accurate time interval between packet transmissions and receipts. Such a system is impractical for this purpose and would be unnecessarily expensive. It is instead desirable to use a standard network node which need not perform additional operations exclusively for the purpose of diagnostic measurements.

According to the present invention there is provided a network diagnostic apparatus for use in determining the position of a network node along a bus wherein packets from the network node propagate in both directions along the bus at the same time, characterized by: timer means for receiving a packet sent from the network node and propagating in one direction along the bus; packet receiving means for receiving a corresponding packet propagating in the opposite direction along the bus, and for subsequently sending a signal to the timer means indicating receipt by the packet receiving means of said corresponding packet; and means for determining the time difference between the arrival of the packet and the arrival of said signal at the timer means. From the time difference thus determined, the distance between the nodes can be derived.

In one embodiment the packet receiving means comprises echo means for receiving said corresponding packet and for subsequently sending an echo packet to the timer means along the bus. Thus this aspect of the present invention involves using the LAN itself to provide communication between the timer means and echo means.

The timer means and echo means may comprise time consistent means (as defined hereinafter) for detecting packet arrival times and for identifying the source address of arriving packets. The echo means also preferably comprises means for detecting the transmission time of a packet relative to a previous packet's arrival time. Thus the timer means and echo means may comprise the same hardware components and may each be embodied on computer card.

In another embodiment the packet receiving means comprises means for receiving said corresponding packet and for subsequently sending a signal to the timer means via a signal path, such as a cable, separate from said bus. In this case the timer means may include first storage means for storing the time of arrival of the packet at the timer means and second storage means for storing the time of arrival of said signal. The timer means may comprise a microprocessor system which uses the values stored in the first and second storage means to calculate the position of the network node along the bus.

In either embodiment the timer means and packet receiving means are preferably connected to respective ends of the bus.

The present invention also provides a method for determining the position of a network node on a communications network comprising a bus to which the network node is connected and timer means and packet receiving means connected at spaced locations along the bus, characterized by the steps of: sending a packet from the network node onto the bus so that the packet propagates in both directions along the bus at the same time; receiving the packet propagating in one direction at the timer means; receiving the corresponding packet propagating in the opposite direction at the packet receiving means and subsequently sending a signal to the timer means indicating receipt by the packet receiving means of said corresponding packet; receiving said signal at the timer means; and determining the time delay between receipt of the packet and receipt of said signal at the timer means.

The packet receiving means may comprise echo means and said signal may comprise an echo packet sent in said one direction along the bus. The method may then include the step of sending a packet containing echo time information from the echo means to the timer means. In addition, the method may include initially sending a signal, such as a data packet, between the timer means and the echo means for identifying the network address of the network node under investigation.

Alternatively the signal may be sent to the timer means via a signal path separate from said bus.

Network diagnostic apparatus and methods in accordance with the present invention will now be described by way of example, with reference to the accompanying drawings in which:

Figure 1 is a schematic representation of a network diagnostic tool according to the present invention;

Figure 2 illustrates the components of the timer and echo devices;

Figure 3 is a protocol diagram;

Figure 4 is a schematic representation of a network diagnostic tool according to a second embodiment of the present invention;

Figure 5 illustrates the components of the packet detect device and the special purpose network node of Figure 4;

Figure 6 is a protocol diagram relating to the embodiment shown in Figures 4 and 5.

Embodiments of the invention will be described with regard to the IEEE 802.3 network by way of example and it should be understood that the invention is also applicable to other types of network.

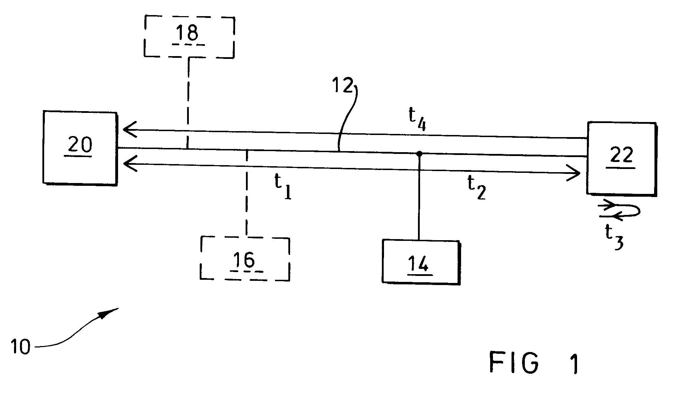

Figure 1 shows a LAN indicated generally at 10 comprising a shared multi-access bus 12 and several workstations 14, 16, 18, 20 and 22. The workstations 20 and 22 are connected to the ends of the bus 12 and also function as timer and echo stations respectively. The workstation 14 represents the network node whose position is to be determined and the remaining workstations are shown in dotted lines.

In broad terms, the diagnostic tool operates as follows:

A timer at the timer station 20 is started when a packet from the transmitting work station 14 arrives. This packet will also travel towards the echo station 22, where it will be detected. The echo station 22 will then delay a measured time t3 prior to transmitting a packet towards the timer station 20. When this packet reaches the timer station 20, the timer will be stopped. The time measured is evaluated below:

$$T = (t2 + t3 + t4) - t1$$

but

$$t4 = t1 + t2$$

therefore

$$T = 2.t2 + t3$$

where t3 is measured by the echo station. Hence t2 can be determined and the position of the workstation 14 on the LAN found.

Communication between the timer station 20 and echo station 22 is needed in order to synchronise activity eg. as to which is the workstation under investigation. Therefore, a communications protocol is required between the timer and echo stations 20 and 22. Both the timer and echo stations may be computers with special purpose LAN interfaces which also allow the LAN to be used for normal communication. The timer and echo stations 20 and 22 comprise special purpose time consistent matching hardware for identifying packets and for enabling packet transmission after a measured delay. By the 'time consistent matching hardware' is meant that the time taken to detect the arrival of a packet is the same for both sets of hardware and that the echo time can be measured consistently. Since the packet matching and timing functions are common to the timer and echo stations 20 and 22, a common interface card could be designed which performs all the necessary functions of the timer and echo stations.

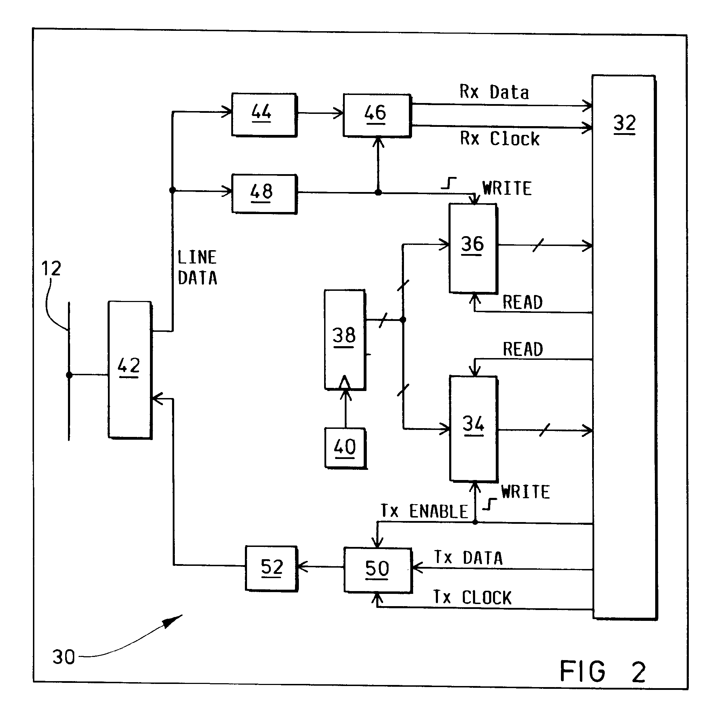

Referring to Figure 2, the timer means in the timer station 20 is indicated generally at 30. The timer means 30 comprises a microprocessor system and network controller 32, a transmit time register 34, a receive time register 36, a counter 38 and an oscillator 40.

The timer means 30 communicates with the LAN 10 by means of a network transceiver 42, such as a standard IEEE 802.3 transceiver. Incoming signals are supplied from the transceiver 42 to the microprocessor system 32 via a data receive amplifier and filter 44 and a line decoder 46, such as a Manchester decoder. Incoming signals are supplied from the network transceiver 42 to the receive time register 36 via a carrier or packet detect device 48. Signals are supplied from the microprocessor 32 to the network transceiver 42 via a line encoder 50, such as a Manchester encoder, and a transmitter amplifier 52.

For convenience the echo means in the echo station 22 comprises the same components as the timer means 30. Both the timer means 30 and the echo means may form part of a computer card. It will be understood that the timer means will not make use of the transmit time register 34. The "write" signals to the transmit time and receive time registers 34 and 36 must be generated accurately at the point of packet transmission and reception respectively.

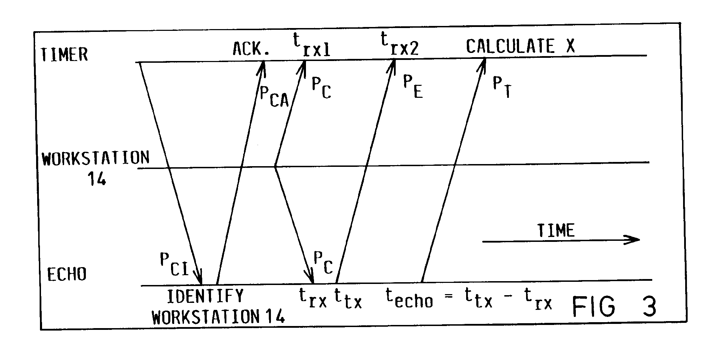

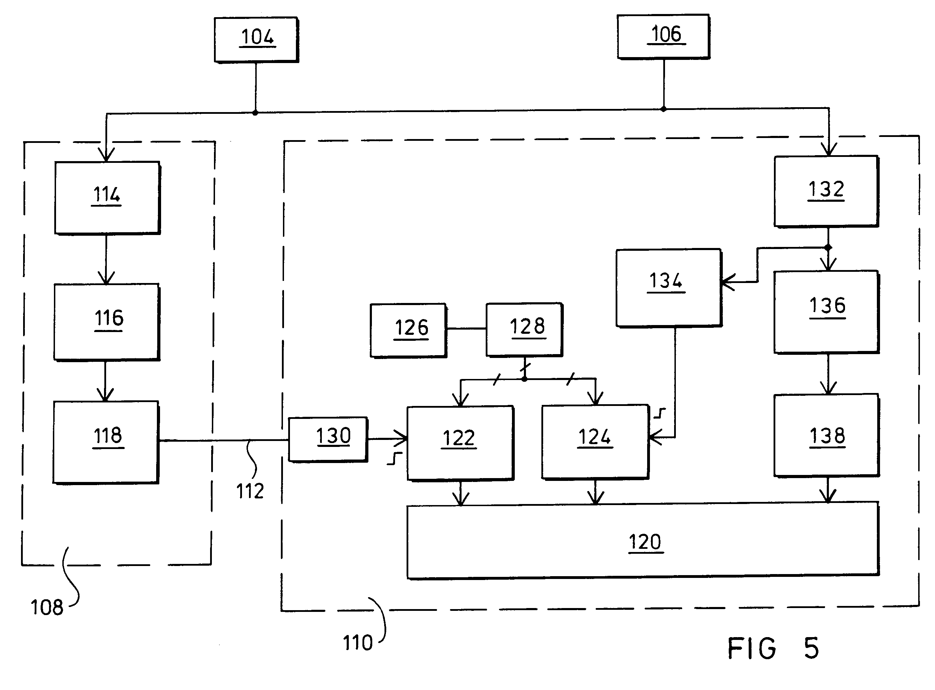

In operation, the timer and echo stations 20 and 22 implement the algorithms described as follows and as illustrated in Figure 3:

Timer Station Software Algorithm

1. Transmit a packet ($P_{CI}$) to the echo station 22 identifying the network address of the workstation 14.

2. Wait for an acknowledgement packet ($P_{CA}$) from the echo station 22.

3. Wait for a packet ($P_C$) from the work station 14.

4. Read the receive time register 36 which indicates the time ($t_{rx1}$) of packet receipt to the required accuracy.

5. Wait for a packet ($P_E$) from the echo station 22.

6. Read the receive time register 36 which indicates the time ($t_{rx2}$) of packet receipt to the required accuracy.

7. Wait for a packet ($P_T$) from the echo station 22 which carries timing information ($t_{echo}$) from the echo station 22 where $t_{echo}$ may be determined in a relaxed time frame.

8. Calculate the physical position of the workstation 14 on the network from the formula:

$$X = \frac{(t_{rx2} - t_{rx1} - t_{echo})\,v}{2}$$

where x is the distance of the workstation 14 from the echo station 22 along the bus 12, and v is the signal propagation velocity on the network.

Echo Station Software Algorithm

1. Wait for a packet ($P_{CI}$) from the timer station 20 identifying the network address of the workstation 14.

2. Transmit an acknowledgement packet ($P_{CA}$) to the timer station 20.

3. Wait for a packet ($P_C$) from the workstation 14.

4. Read the receive time register 36 which indicates the time ($t_{rx}$) of packet ($P_C$) arrival.

5. Transmit an echo packet ($P_E$) to the timer station 20.

6. Read transmit time register 34 to determine accurate transmit time ($t_{tx}$).

7. Calculated the time taken to echo ($t_{echo}$) by

$$t_{echo} = t_{tx} - t_{rx}$$

8. Transmit a packet ($P_T$) to the timer station 20 which carries the information $t_{echo}$.

9. Go to state 1.

The system is arranged so that the packet matching functions are carried out without tight time constraints.

It will be noted that all packets transmitted from a workstation contain the addresses of their source and destination.

In practice, it may be found to be advantageous for the network diagnostic tool to be configured so as to echo all packets received, or all packets received within a selected time period, rather than only to echo packets from the chosen workstation.

The timing resolution necessary in the timer means 30 depends upon the speed of propagation on the network and the required accuracy of network node position resolution along the bus. For the IEEE 802.3 network the propagation speed is approximately 0.2 metres per nanosecond. The minimum recommended distance between any two stations is 2.5 metres. In order for the timer means to differentiate between two stations A and B which are the minimum distance apart the time T must be measurable:

$$
\begin{aligned}
T &= T_a - T_b \\
&= (2.t2_a + t3_a) - (2.t2_b + t3_b) \\
&= 2\,(t2_a - t2_b) \quad (\text{assuming } t3_a = t3_b \text{ approximately}) \\
&= 2\,(2.5 / 0.2) \text{ ns} \\
&= 25 \text{ ns}
\end{aligned}
$$

(The subscript $_a$ applies to measurements made in determining the position of station A and subscript $_b$ applies to measurements made in determining the position of station B).

In order to provide this timing resolution the counter 38 is required to operate at a frequency equal to or greater than 40 megahertz. To provide the necessary accuracy the counter must be accurate to greater than 25 ns over the complete interval timed. The minimum packet length on an IEEE 802.3 network is 596 bits and the transmission rate is 10 Mbits/s. The algorithm requires that a time interval equivalent to the transmission time of a minimum size packet plus upto twice the end to end propagation delay plus the time delay between packet receipt and packet transmission at the echo station be measured. If the time between packet receipt and transmission at the echo station is assumed to be less than 200 microseconds and a 500m network is assumed, this corresponds to a time interval T where

$$T = 596 \text{ bits}/(10 \times 10^6) + 2.(500/[0.2 \times 10^9]) + 200 \times 10^{-6}$$
$$= 265 \text{ microseconds}$$

Hence, a 40 megahertz crystal oscillator with a frequency accuracy of at least 95 parts per million is required. An increased accuracy could be achieved without increasing the crystal oscillator frequency by averaging over multiple readings.

The above embodiment provides a network diagnostic tool for ascertaining the position of a network node along a multi-access bus without the need for any external connections to the network.

In the embodiment described above it is the timer station which indicates which workstation is under investigation. An alternative approach would be to configure the system so that the diagnostic tool can be used in response to an initiating packet from a workstation.

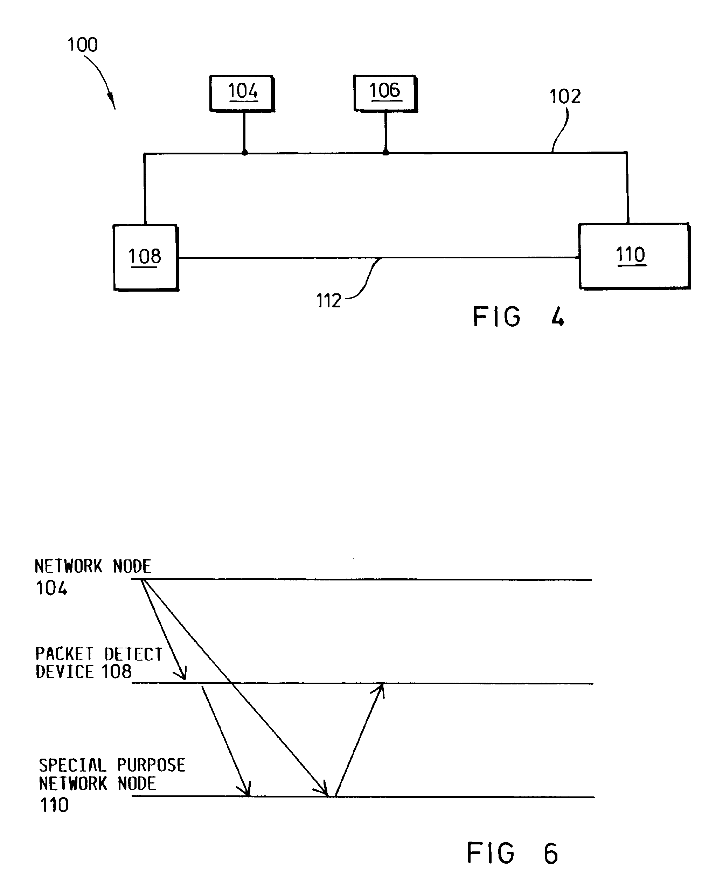

A second embodiment of the present invention will now be described with references to Figures 4 to 6. Figure 4 shows a LAN 100 comprising a multi-access bus 102 and network nodes 104 and 106. Packets from the network nodes travel in both directions along the multi-access bus 102. A packet detect device 108 is connected to the first end of the bus 102 and a timer device in the form of a special purpose network node 110 is connected to the other end of the bus 102. A cable 112 interconnects the packet detect device 108 and the special purpose network node 110.

In broad terms, the network diagnostic tool depicted in Figure 4 operates as follows.

When a packet is detected by the packet detect device 108, a signal is sent from the packet detect device 108 to the special purpose network node 110 via the cable 112. The special purpose network node 110 logs the time of arrival (T1) of the packet. The corresponding packet which has travelled in the other direction along the multi-access bus 102 is detected by the special purpose network node 110 and its time of arrival (T2) is also logged.

An initial calibration is required to take account of the time which elapses between both:

a) receipt of a packet by the network receiver 114 and consequent clocking of the register 122$^{(tp)}$, and

b) receipt of a packet by the network receiver 132 and consequent clocking of the register 124 (tq).

The distance (x) of the network node from the end of the bus 102 can then be calculated as follows:
$$x = [(T_2 - t_q) - (T_1 - t_p)].V$$
Where V is the propagation speed on the network. The sign of x indicates with respect to which end of the bus 102 the calculated distance is to be used.

Referring now to Figure 5, the packet detect device 108 comprises a network receiver 114, a packet detector 116 and a signal transmitter 118. The special purpose network node 110 comprises a microprocessor system 120 which receives timing data from two receive time registers 122 and 124. An oscillator 126 provides clock signals to a counter 128 which is connected to the registers 122 and 124. A signal detector 130 detects signals sent from the signal transmitter 118 via the cable 112. A network receiver 132 receives packets from the bus 102 and sends these to a packet detector 134 connected to the register 124 and also to an amplifier and filter 136. The amplifier and filter 136 is connected to a line decoder 138 which supplies signals to the microprocessor system 120.

The operation of the network diagnostic tool will now be described with reference to Figure 5 and to the protocol diagram of Figure 6.

A packet emitted from the network node 104 is received by the network receiver 114 which supplies signals to the packet detector 116 which provides a signal pulse which is amplified by the signal transmitter 118 to produce a signal which indicates the arrival of a packet. This signal travels via the cable 112 to the signal detector 130 of the special purpose network node 110 which causes the register 122 to latch the value of the counter 128. The corresponding packet arriving at the second end of the bus 102 is transferred via the network receiver 132 to the packet detector 134 which produces a signal causing the register 124 to latch the value of the counter 128.

The amplifier and filter 136 transfer signals from the network receiver 132 to the microprocessor system 120 via the line decoder 138 where the transmitted packet data will be recovered. The microprocessor system 120 identifies the network node source address supplied in the data packet and reads the contents of the registers 122 and 124 after a delay which is longer than the network propagation delay. In effect the microprocessor is alerted to the arrival of a packet at the second end of the bus 102 soon after the packet begins to arrive and then waits for the contents of the registers 122 and 124 to change.

The position of the network node originating the transmitted packet is calculated as follows:
$$x = [(T2 - t_q) - ((T1 - t_p)].V$$
Where V is the propagation speed on the network and $t_p$ and $t_q$ are as explained above. The sign of the result indicates whether the calculated distance is with respect to the first or the second end of the bus 102.

In practice, the time taken to transmit or receive a packet is much greater than the propagation time along the network. This means that there is no real chance of spurious measurements being made as a result of confusion between different packets sent by a single network node.

On networks such as the IEEE 802.3 network which use a carrier sense multiple access method to control access to the network, packet collisions can occur. Measurements obtained after a collision is detected would be rejected. An alternative method for use on different types of networks would be to take several measurements for a particular network node and to discount any measurements which differ markedly from the rest.

Generally, measurement accuracy and reliability may be improved by taking multiple readings and averaging these.

It will be understood that the present invention is applicable to any network or part of a network comprising a continuous multi-access bus.

**Claims**

1. A network diagnostic apparatus for use in determining the position of a network node (14,104) along a bus (12,102) wherein packets from the network node propagate in both directions along the bus at the same time, characterized by:

   timer means (20,110) for receiving a packet sent from the network node and propagating in one direction along the bus;

   packet receiving means (22,108) for receiving a corresponding packet propagating in the opposite direction along the bus, and for subsequently sending a signal to the timer means (20,110) indicating receipt by the packet receiving means of said corresponding packet; and

   means for determining the time difference between the arrival of the packet and the arrival of said signal at the timer means (20,110).

2. A network diagnostic apparatus according to claim 1 wherein said packet receiving means comprises echo means (22) for receiving said corresponding packet and for subsequently sending an echo packet to the timer means along the bus (12).

3. A network diagnostic apparatus according to claim 2 wherein the timer means (20) and echo means (22) comprise time consistent means (30) for detecting packet arrival times and for identifying the source address of arriving packets.

4. A network diagnostic apparatus according to claim 2 or claim 3 wherein the echo means (22) comprises means (34) for detecting the transmission time of a packet relative to a previous packet's arrival time.

5. A network diagnostic apparatus according to claim 4 wherein the echo means (22) comprises means for sending a packet containing echo time information to the timer means (20).

6. A network diagnostic apparatus according to any one of claims 2 to 5 wherein the timer means (20) and echo means (22) comprise the same hardware components.

7. A network diagnostic apparatus according to any one of claims 2 to 6 wherein the timer means (20) and echo means (22) are each embodied on a computer card.

8. A network diagnostic apparatus according to any one of claims 2 to 7 wherein the echo means (22) comprises means for echoing all packets which it receives or all packets which it receives during a selected time period.

9. A network diagnostic apparatus according to claim 1 wherein said packet receiving means comprises means (108) for receiving said corresponding packet and for subsequently sending a signal to the timer means (110) via a signal path (112) separate from said bus (102).

10. A network diagnostic apparatus according to claim 9 wherein the timer means (110) comprises first storage means (124) for storing the time of arrival of the packet at the timer means and second storage means (122) for storing the time of arrival of said signal.

11. A network diagnostic apparatus according to claim 10 wherein the timer means (110) comprises a micro-

EP 0 381 878 B1

processor system (120) for utilizing the values stored in the first and second storage means (124,122) to calculate the position of the network node (104) along the bus (102).

12. A network diagnostic apparatus according to any one of the preceding claims wherein the timer means (20,110) and packet receiving means (22,108) are connected to respective ends of the bus (12,102).

13. A network diagnostic apparatus according to any one of the preceding claims including means for making several time difference measurements, means for comparing said measurements and means for discarding any measurement which differs markedly from the majority of the measurements.

14. A method for determining the position of a network node (14,104) on a communications network (10,100) comprising a bus (12,102) to which the network node is connected and timer means (20,110) and packet receiving means (22,108) connected at spaced locations along the bus, characterized by the steps of: sending a packet from the network node (14,104) onto the bus (12,102) so that the packet propagates in both directions along the bus at the same time; receiving the packet propagating in one direction at the timer means (20,110); receiving the corresponding packet propagating in the opposite direction at the packet receiving means (22,108) and subsequently sending a signal to the timer means (20,110) indicating receipt by the packet receiving means of said corresponding packet; receiving said signal at the timer means (20,110); and determining the time delay between receipt of the packet and receipt of said signal at the timer means (20,110).

15. A method according to claim 14 wherein said packet receiving means comprises echo means (22) and said signal comprises an echo packet sent in said one direction along the bus (12).

16. A method according to claim 15 further comprising sending a packet containing echo time information from the echo means (22) to the timer means (20).

17. A method according to claim 15 or claim 16 comprising initially sending a signal between the timer means (20) and echo means (22) identifying the network address of the network node (14).

18. A method according to claim 14 wherein said signal is sent to the timer means (110) via a signal path (112) separate from said bus (102).

**Patentansprüche**

1. Eine Netzwerk-Diagnosevorrichtung zur Verwendung bei der Bestimmung der Position eines Netzwerkknotens (14, 104) entlang eines Busses (12, 102), bei der sich Pakete von dem Netzwerkknoten gleichzeitig in beide Richtungen entlang des Busses ausbreiten, gekennzeichnet durch: eine Zeitgebereinrichtung (20, 110) zum Empfangen eines Pakets, das von dem Netzwerkknoten gesendet wird und sich in eine Richtung entlang des Busses ausbreitet; eine Paketempfangseinrichtung (22, 108) zum Empfangen eines entsprechenden Pakets, das sich in die entgegengesetzte Richtung entlang des Busses ausbreitet, und zum nachfolgenden Senden eines Signals zu der Zeitgebereinrichtung (20, 110), das den Empfang des entsprechenden Pakets durch die Paketempfangseinrichtung anzeigt; und eine Einrichtung zum Bestimmen des Zeitunterschieds zwischen der Ankunft des Pakets und der Ankunft des Signals an der Zeitgebereinrichtung (20, 110).

2. Eine Netzwerk-Diagnosevorrichtung gemäß Anspruch 1, bei der die Paketempfangseinrichtung eine Echoeinrichtung (22) zum Empfangen des entsprechenden Pakets und zum nachfolgenden Senden eines Echopakets zu der Zeitgebereinrichtung entlang des Busses (12) umfaßt.

3. Eine Netzwerk-Diagnosevorrichtung gemäß Anspruch 2, bei der die Zeitgebereinrichtung (20) und die Echoeinrichtung (22) eine zeitkonsistente Einrichtung (30) zum Erfassen der Paketankunftszeiten und zum Identifizieren der Quelladresse der ankommenden Pakete aufweisen.

4. Eine Netzwerk-Diagnosevorrichtung gemäß Anspruch 2 oder Anspruch 3, bei der die Echoeinrichtung

7

(22) eine Einrichtung (34) zum Erfassen der Übertragungszeit eines Pakets relativ zu der Ankunftszeit eines früheren Pakets aufweist.

5. Eine Netzwerk-Diagnosevorrichtung gemäB Anspruch 4, bei der die Echoeinrichtung (22) eine Einrichtung zum Senden eines Pakets, das Echozeitinformationen enthält, zu der Zeitgebereinrichtung (20) aufweist.

6. Eine Netzwerk-Diagnosevorrichtung gemäß einem beliebigen der Ansprüche 2 bis 5, bei der die Zeitgebereinrichtung (20) und die Echoeinrichtung (22) die gleichen Hardwarekomponenten aufweisen.

7. Eine Netzwerk-Diagnosevorrichtung gemäß einem der Ansprüche 2 bis 6, bei der die Zeitgebereinrichtung (20) und die Echoeinrichtung (22) jeweils auf einer Computerkarte verwirklicht sind.

8. Eine Netzwerk-Diagnosevorrichtung einem beliebigen der Ansprüche 2 bis 7, bei der die Echoeinrichtung (22) eine Einrichtung zum Zurückwerfen aller Pakete, die sie empfängt, oder aller Pakete, die sie während einer ausgewählten Zeitperiode empfängt, aufweist.

9. Eine Netzwerk-Diagnosevorrichtung gemäß Anspruch 1, bei der die Paketempfangsvorrichtung eine Einrichtung (108) zum Empfangen des entsprechenden Pakets und zum nachfolgenden Senden eines Signals über einen Signalpfad (112), der von dem Bus (102) getrennt ist, zu der Zeitgebereinrichtung (110) aufweist.

10. Eine Netzwerk-Diagnosevorrichtung gemäß Anspruch 9, bei der die Zeitgebereinrichtung (110) eine erste Speichereinrichtung (124) zum Speichern der Ankunftszeit des Pakets an der Zeitgebereinrichtung und eine zweite Speichereinrichtung (122) zum Speichern der Ankunftszeit des Signals aufweist.

11. Eine Netzwerk-Diagnosevorrichtung gemäß Anspruch 10, bei der die Zeitgebereinrichtung (110) ein Microprozessorsystem (120) zum Benutzen der in der ersten und der zweiten Speichereinrichtung (124, 122) gespeicherten Werte, um die Position des Netzwerkknotens (104) entlang des Busses (102) zu berechnen, aufweist.

12. Eine Netzwerk-Diagnosevorrichtung gemäß einem beliebigen der vorhergehenden Ansprüche, bei der die Zeitgebereinrichtung (20, 110) und die Paketempfangseinrichtung (22, 108) mit den jeweiligen Enden des Busses (12, 102) verbunden sind.

13. Eine Netzwerk-Diagnosevorrichtung gemäß einem beliebigen vorhergehenden Anspruch, die eine Einrichtung zum Durchführen mehrerer zeitverschiedener Messungen, eine Einrichtung zum Vergleichen der Messungen und eine Einrichtung zum Wegwerfen aller Messungen, die sich wesentlich von der Mehrheit der Messungen unterscheiden, einschließt.

14. Ein Verfahren zum Bestimmen der Position eines Netzwerkknotens (14, 104) auf einem Nachrichtenübermittlungsnetzwerk (10, 100), das einen Bus (12, 102), mit dem der Netzwerkknoten verbunden ist, sowie eine Zeitgebereinrichtung (20, 110) und eine Paketempfangseinrichtung (22, 108), die an räumlich getrennten Standorten entlang des Busses verschaltet sind, aufweist, gekennzeichnet durch folgende Schritte:
Senden eines Pakets von dem Netzwerkknoten (14, 104) auf den Bus (12, 102), so daß sich das Paket gleichzeitig in beide Richtungen entlang des Busses ausbreitet;
Empfangen des Pakets, das sich in eine Richtung ausbreitet, an der Zeitgebereinrichtung (20, 110);
Empfangen des entsprechenden Pakets, das sich in die entgegengesetzte Richtung ausbreitet, an der Paketempfangseinrichtung (22, 108) und nachfolgendes Senden eines Signals zu der Zeitgebereinrichtung (20, 110), das den Empfang des entsprechenden Pakets durch die Paketempfangseinrichtung anzeigt;
Empfangen des Signals an der Zeitgebereinrichtung (20, 110); und
Bestimmen der Zeitverzögerung zwischen dem Empfang des Pakets und dem Empfang des Signals an der Zeitgebereinrichtung (20, 110).

15. Ein Verfahren gemäß Anspruch 14, bei dem die Paketempfangseinrichtung eine Echoeinrichtung (22) umfaßt, und bei dem das Signal ein Echopaket umfaßt, das in die eine Richtung entlang des Busses (12) gesendet wird.

**16.** Ein Verfahren gemäß Anspruch 15, das ferner das Senden eines Pakets, das Echozeitinformationen enthält, von der Echoeinrichtung (22) zu der Zeitgebereinrichtung (20) aufweist.

**17.** Ein Verfahren gemäß Anspruch 15 oder Anspruch 16, das das anfängliche Senden eines Signals zwischen der Zeitgebereinrichtung (20) und der Echoeinrichtung (22) umfaßt, wobei die Netzwerkadresse des Netzwerkknotens (14) identifiziert wird.

**18.** Ein Verfahren gemäß Anspruch 14, bei dem das Signal über einen Signalpfad (112), der von dem Bus (102) getrennt ist, zu der Zeitgebereinrichtung (110) gesendet wird.

**Revendications**

**1.** Un appareil de diagnostic de réseau à utiliser pour déterminer la position d'un noeud (14, 104) de réseau le long d'un bus (12, 102) dans lequel des paquets venant du noeud du réseau se propagent en même temps dans les deux sens le long du bus, caractérisé par:
un moyen de registre d'horloge (20, 110) pour recevoir un paquet envoyé depuis le noeud du réseau et se propageant dans un premier sens le long du bus;
un moyen récepteur (22, 108) de paquet pour recevoir un paquet correspondant qui se propage dans le sens opposé le long du bus et pour envoyer ensuite au moyen de registre d'horloge (20, 110) un signal indiquant la réception dudit paquet correspondant par le moyen récepteur de paquets; et
un moyen de détermination de différence de temps entre l'arrivée du paquet et l'arrivée dudit signal au moyen de registre d'horloge (20, 110).

**2.** Un appareil de diagnostic de réseau selon la revendication 1, dans lequel ledit moyen récepteur de paquets comprend un moyen d'écho (22) pour recevoir ledit paquet correspondant et pour envoyer ultérieurement le long du bus (12) au moyen de registre d'horloge un paquet d'écho.

**3.** Un appareil de diagnostic de réseau selon la revendication 2, dans lequel le moyen de registre d'horloge (20) et un moyen d'écho (22) comprennent des moyens cohérents dans le temps (30) pour détecter des temps d'arrivée de paquets et pour identifier l'adresse de source de paquets qui arrivent.

**4.** Un appareil de diagnostic de réseau selon la revendication 2 ou la revendication 3 dans lequel le moyen d'écho (22) comprend un moyen détecteur (34) du temps de transmission d'un paquet par rapport à un temps d'arrivée du paquet précédent.

**5.** Un appareil de diagnostic de réseau selon la revendication 4 dans lequel un moyen d'écho (22) comprend un moyen d'envoi, au moyen de registre d'horloge (20), d'un paquet contenant une information de temps d'écho.

**6.** Un appareil de diagnostic de réseau selon l'une quelconque des revendications 2 à 5 dans lequel le moyen de registre d'horloge (20) et le moyen d'écho (22) comprennent les mêmes composants de matériel.

**7.** Un appareil de diagnostic de réseau selon l'une quelconque des revendications 2 à 6, dans lequel le moyen de registre d'horloge (20) et le moyen d'écho (22) sont chacun réalisés sur une carte d'ordinateur.

**8.** Un appareil de diagnostic de réseau selon l'une quelconque des revendications 2 à 7, dans lequel le moyen d'écho comprend un moyen d'émission d'échos pour tous les paquets qu'il reçoit, ou pour tous les paquets qu'il reçoit pendant un laps de temps choisi.

**9.** Un appareil de diagnostic de réseau selon la revendication 1, dans lequel ledit moyen récepteur de paquets comprend un moyen (108) de réception dudit paquet correspondant et d'envoi ultérieur d'un signal au moyen de registre d'horloge (110) par l'intermédiaire d'un trajet de signaux (112) séparé dudit bus (32).

**10.** Un appareil de diagnostic de réseau selon la revendication 9 dans lequel le moyen de registre d'horloge (110) comprend un premier moyen de mémoire (124) pour mémoriser le temps d'arrivée du paquet au moyen de registre d'horloge et un deuxième moyen de mémoire (122) pour mémoriser le temps d'arrivée dudit signal.

**11.** Un appareil de diagnostic de réseau selon la revendication 10 dans lequel le moyen de registre d'horloge (110) comprend un système à microprocesseur (120) pour utiliser les valeurs mémorisées dans le premier et le deuxième moyens de mémoire (124, 122) pour calculer la position du noeud (104) de réseau le long du bus (102).

**12.** Un appareil de diagnostic de réseau selon l'une quelconque des revendications précédentes dans laquelle le moyen de registre d'horloge (20, 110) et un moyen récepteur (22, 108) de paquets sont reliés à des extrémités respectives du bus (12, 102).

**13.** Un appareil de diagnostic de réseau selon l'une quelconque des revendications précédentes incluant un moyen permettant d'effectuer plusieurs mesures de différences de temps, un moyen comparateur de mesures et un moyen de rejet de toute mesure qui diffère de façon marquée de la majorité des mesures.

**14.** Un procédé de détermination de la position d'un noeud (14, 104) de réseau sur un réseau de communications (10, 100) comprenant un bus (12, 102) auquel le noeud de réseau est relié et un moyen de registre d'horloge (20, 110) et un moyen récepteur de paquets (22, 108) reliés à des emplacements espacés le long du bus, caractérisé par les étapes consistant à:

envoyer du noeud (14, 104) du réseau un paquet sur le bus (12, 102) de façon que le paquet se propage en même temps dans les deux sens le long du bus;

recevoir au moyen de registre d'horloge (20, 110) le paquet qui se propage dans un premier sens;

recevoir au moyen récepteur (22, 108) de paquets le paquet correspondant qui se propage dans le sens opposé et envoyer ensuite au moyen de registre d'horloge (20, 110) un signal indiquant la réception du paquet correspondant par le moyen récepteur de paquets;

recevoir ledit signal audit moyen de registre d'horloge (20, 110); et

déterminer le retard de temps entre la réception du paquet et la réception dudit signal au moyen de registre d'horloge (20, 110).

**15.** Un procédés selon la revendication 14 dans lequel ledit moyen récepteur de paquets comprend un moyen d'écho (22) et ledit signal comprend un paquet d'écho envoyé dans ledit premier sens le long du bus (12).

**16.** Un procédé selon la revendication 15 comprenant en outre l'envoi au moyen de registre d'horloge (20), à partir du moyen d'écho, d'un paquet contenant une information de temps d'écho.

**17.** Un procédé selon la revendication 15 ou la revendication 16 comprenant un envoi initial, entre le moyen de registre d'horloge (20) et le moyen d'écho 22, d'un signal identifiant l'adresse de réseau du noeud (14) de réseau.

**18.** Un procédé selon la revendication 14 dans lequel ledit signal est envoyé au moyen de registre d'horloge (110) par l'intermédiaire d'un trajet (112) de signaux séparé dudit bus (102).

FIG 1

FIG 2

FIG 3

FIG 5

EP 0 381 878 B1

100

104    106                    102

108 ──────────────────────── 110

112

FIG 4

NETWORK NODE
104

PACKET DETECT
DEVICE 108

SPECIAL PURPOSE
NETWORK NODE
110

FIG 6